# EUROPÄISCHE PATENTSCHRIFT

(11) **EP 1 561 953 B1**
(45) Veröffentlichungstag und Bekanntmachung des Hinweises auf die Patenterteilung: **11.04.2007**
(21) Anmeldenummer: 05075257.5
(22) Anmeldetag: 01.02.2005
(51) Int. Cl.: F16B 1/00

(54) **Baugruppe mit Verbindungselementen aus einer Formgedächtnislegierung**
assembly with joining elements made out of shape-memory alloy
Ensemble incorporant des éléments de liaison en alliage à mémoire de forme

(30) Priorität: 04.02.2004 DE 102004006474
(43) Veröffentlichungstag der Anmeldung: 10.08.2005
(73) Patentinhaber: SIEMENS AKTIENGESELLSCHAFT, 80333 München (DE)
(72) Erfinder: Clemens, Wolfgang, Dr., 90617 Puschendorf (DE); Kautz, Stefan, Dr., 91094 Langensendelbach (DE); Zeininger, Heinrich, Dr., 90587 Obermichelbach (DE)

(56) Entgegenhaltungen:
- WO-A-03/054396
- US-A1- 2002 050 045
- PATENT ABSTRACTS OF JAPAN Bd. 2003, Nr. 12, 5. Dezember 2003 (2003-12-05) & JP 2004 271992 A (SHARP CORP), 30. September 2004 (2004-09-30)
- PATENT ABSTRACTS OF JAPAN Bd. 2002, Nr. 08, 5. August 2002 (2002-08-05) -& JP 2002 123654 A (MITSUBISHI MATERIALS CORP), 26. April 2002 (2002-04-26)

## Beschreibung

Die Erfindung betrifft eine Baugruppe mit einer Vielzahl von Einzelkomponenten, die zumindest teilweise durch Verbindungselemente aus einer Formgedächtnislegierung (im Folgenden FGL) lösbar miteinander verbunden sind.

Baugruppen der eingangs angegebenen Art sind beispielsweise aus der DE 101 51 666 A1 bekannt. Die Baugruppe gemäß diesem Dokument kann beispielsweise aus einem Gehäuse und einer darin befestigten Leiterplatte bestehen, wobei die Verbindungselemente durch Niete aus einer Formgedächtnislegierung gebildet sind. Diese könnten unter Ausnutzung der FGL eigenen Phasenumwandlung des Gefüges nach einer Montage wieder demontiert werden. Dabei kann der Formgedächtniseffekt der FGL genutzt werden, der bei einer Erwärmung der Niete zu einer Rückverformung in den unverformten Zustand der Niete führt. Andererseits kann eine Demontage auch durch Abkühlung der Niete erleichtert werden, wobei sich deren Gefüge aufgrund der Abkühlung in eine weiche, martensitische Phase umwandelt, in der die Verformung der Niete ohne großen Kraftaufwand auf mechanischem Wege rückgängig gemacht werden kann.

Gemäß der WO 03/054396 A1 können die Verbindungselemente auch aus einer magnetischen Formgedächtnislegierung (im Folgenden MFGL) gebildet werden. Hierbei wird ein Formgedächtniseffekt genutzt, der sich bei den Verbindungselementen unter Einwirkung eines hinreichend starken Magnetfeldes einstellt, so dass diese in den unverformten Zustand überführt werden.

Aus der US 2002/0050045 A1 ist es weiterhin bekannt, Produkte mit Verbindungselementen aus einer FGL automatisiert zu demontieren. Es wird zum Zwecke der automatisierten Demontage vorgeschlagen, die Demontageeinrichtung mit einer Kammer auszustatten, in der ein bestimmtes, insbesondere treppenförmiges Temperaturprofil durchlaufen wird, wenn die zu demontierenden Teile auf ein Förderband gelegt werden, welches durch diese Kammer führt. Durch Wahl von Verbindungselementen aus verschiedenen FGL, die unterschiedliche Umwandlungstemperaturen aufweisen, wird erreicht, dass die Verbindungselemente in einer durch das Temperaturprofil definierten Reihenfolge gelöst werden, so dass bestimmte Bauteile automatisch zu bestimmten Zeitpunkten des Demontageprozesses freigegeben werden.

Die Aufgabe der Erfindung besteht darin, eine Baugruppe mit unter Verwendung von Verbindungselementen aus einer FGL montierten Einzelkomponenten anzugeben, deren Demontage einfach und zuverlässig ermöglicht werden kann.

Diese Aufgabe wird erfindungsgemäß dadurch gelöst, dass die Baugruppe einen unabhängig von der Funktion der Baugruppe auslesbaren Datenträger enthält, auf dem Daten für die Prozessführung einer Demontageeinrichtung gespeichert sind. Hierdurch wird erreicht, dass eine Demontage vollautomatisch bzw. zumindest teilautomatisiert durch die Demontageeinrichtung vorgenommen werden kann, wodurch insbesondere die Wahrscheinlichkeit von bei der Demontage auftretenden Fehlern (z. B. falsche Sortierung oder versehentliche Zerstörung von Einzelkomponenten) vorteilhaft minimiert werden kann. Weiterhin können Demontageabläufe, bei denen eine Gesundheitsschädlichkeit für den Menschen nicht ausgeschlossen werden kann, automatisiert erfolgen, und so ein von dem Montageprozess ausgehendes Gefährdungspotential für den Menschen ausgeschlossen werden.

Die Demontageeinrichtung ist dabei selbstverständlich für die Demontage der erfindungsgemäßen Baugruppe in geeigneter Weise ausgestattet. So muss der Datenträger der Baugruppe vor dem Durchlaufen des Demontageprozesses ausgelesen und die prozessrelevanten Daten müssen der Demontageeinrichtung zur Verfügung gestellt werden, so dass die Prozessführung in Abhängigkeit der ausgelesenen Daten an die zu demontierenden Baugruppe angepasst werden kann.

Aus dem Abstract der JP 2002-123654 A ist es zwar bekannt, ein Produkt mit einem Datenträger wie z. B. einem RFID-Tag zu versehen und auf diesen Datenträger auch Recyclinginformationen zu speichern, jedoch beziehen sich diese Recyclinginformationen lediglich auf das Produkt selbst, also z. B. darauf, ob das Produkt überhaupt recycelbar ist oder nicht. Produktbezogene Informationen für das Recycling reichen jedoch für eine automatisierte Demontage desselben nicht aus, hierzu ist viel mehr die erfindungsgemäße Speicherung von Prozessdaten für die Demontagereinrichtung notwendig.

Gemäß einer Ausgestaltung der Erfindung ist vorgesehen, dass auf dem Datenträger ein zum Lösen der Einzelkomponenten geeignetes Temperaturprofil gespeichert ist, welches durch eine geforderte Temperatur der Baugruppe oder der Demontageeinrichtung abhängig vom zeitlichen Verlauf des Demontageablaufes oder abhängig vom Ort in der Demontageeinrichtung definiert ist. Das Durchlaufen des Temperaturprofils stellt sicher, dass die zu lösenden Verbindungen temperaturabhängig zum richtigen Zeitpunkt oder am richtigen Ort der Demontageeinrichtung unter Ausnutzung der Eigenschaften der FGL gelöst werden. Damit werden die zu lösenden Einzelkomponenten an einen definierten Ort der Demontageeinrichtung bzw. zu einem definierten Zeitpunkt vereinzelt und können damit sortiert einer Wiederverwendung bzw. Entsorgung zugeführt werden.

Es ist dabei vorteilhaft, wenn das Temperaturprofil einen treppenartigen Verlauf aufweist. Hierdurch kann sichergestellt werden, dass die Baugruppe nacheinander auf unterschiedliche Temperaturniveaus gebracht wird. Jedes Temperaturniveau kann für die Ausnutzung des Verhaltens jeweils eines definierten Teils von Verbindungselementen ausschlaggebend sein, so dass vorteilhaft durch geeignete Verwendung der Verbindungselemente eine automatische Sortierung der Einzelkomponenten nach bestimmten Klassen möglich wird. Auf jedem Temperaturniveau wird dann der Formgedächtniseffekt bestimmter Verbindungselemente aktiviert, so dass diese sich zu einem definierten Zeitpunkt des Demontageprozesses bzw. an einem bestimmten Ort der Demontageeinrichtung lösen.

Ebenso ist es vorteilhaft, dass für unterschiedliche Regionen der Baugruppe unterschiedliche Temperaturprofile gespeichert sind. Durch einen stark lokalen Wärmeeintrag in die Baugruppe können damit z. B. gezielt bestimmte Verbindungselemente gelöst werden, während andere aufgrund eines nicht ausreichenden Wärmeeintrages im fixierten Zustand verbleiben. Auch hierdurch ist eine Sortierung von demontierten Einzelkomponenten möglich. Die Sortierung wird damit ebenfalls durch die aus dem baugruppeneigenen Datenträger ausgelesenen Daten vollautomatisch bewerkstelligt.

Gemäß einer anderen Ausgestaltung der Erfindung ist vorgesehen, dass die Einzelkomponenten zumindest teilweise aus einer magnetischen Formgedächtnislegierung (MFGL) bestehen und auf dem Datenträger Daten für ein zum Lösen dieser Einzelkomponenten geeigneten Einsatz eines Magnetfelderzeugers der Demontageeinrichtung gespeichert sind. Hierbei wird vorteilhaft die Eigenschaft von MFGL ausgenutzt, dass der Formgedächtniseffekt durch Einprägung eines Magnetfeldes hervorgerufen werden kann. Auch in diesem Fall wird der Magnetfelderzeuger durch die aus dem baugruppeneigenen Datenträger in die Demontageeinrichtung eingelesenen Daten vollautomatisch bewerkstelligt. Besonders vorteilhaft lässt sich bei einer geeigneten Kombination von Verbindungselementen aus einer MFGL und Verbindungselementen aus temperaturabhängig reagierenden FGL eine Baugruppe erzeugen, bei der eine weitgehende automatische Sortierung von Einzelkomponenten schon während der Demontage möglich ist, da die Effekte einer thermischen und magnetischen Auslösung der Formgedächtniseffekte untereinander kombiniert werden können.

Gemäß einer besonderen Ausgestaltung der Erfindung ist vorgesehen, dass auf dem Datenträger bezüglich der Einzelkomponenten der Lösezeitpunkt im Demontageablauf oder der Löseort in der Demontageanlage gespeichert ist. Hierdurch können prozessbedingte Informationen auf dem Datenträger vorteilhaft mit produktbezogenen Informationen verknüpft werden, so dass hierdurch eine besonderes weitreichende Automatisierung des Demontageprozesses ermöglicht wird. Damit ist über eine Sortierung der Einzelkomponenten hinaus auch eine gezielte Weiterverarbeitung der vereinzelten Einzelkomponenten möglich. Insbesondere können besonders vorteilhaft auf dem Datenträger zusätzlich recyclingrelevante Daten der Einzelkomponenten gespeichert werden, so dass bei der Weiterverarbeitung der Einzelkomponenten beispielsweise Gefahrenklassen der Einzelkomponenten oder eine Wiederverwertbarkeit derselben Beachtung finden kann.

Weiter bezieht sich die Erfindung auf ein Verfahren zum Demontieren einer Baugruppe mit einer Vielzahl von Einzelkomponenten, die zumindest teilweise durch lösbare Verbindungselemente aus einer FGL verbunden sind, unter Ausnutzung des Formgedächtniseffektes. Ein solches Verfahren ist aus dem bereits eingangs erwähnten Stand der Technik (DE 101 51 666 A1 und WO03/054396 A1) bekannt.

Aufgabe der Erfindung ist die Angabe eines Verfahrens zum Demontieren einer Baugruppe mit durch FGL-Verbindungselemente gefügten Einzelkomponenten, welches sich einfach durchführen lässt und einen hohen Sicherheitsstandard gewährleistet.

Diese Aufgabe wird erfindungsgemäß dadurch gelöst, dass Daten für eine Prozessführung der Demontage einem als Teil der Baugruppe ausgeführten Datenträger entnommen werden, die Daten in eine Demontageeinrichtung eingespeist werden und die Baugruppe mit Hilfe der eingespeisten Daten in der Demontageeinrichtung automatisch demontiert wird. Durch die eindeutige Zuordnung des Datenträgers zur jeweiligen Baugruppe ist eine Verwechslungsgefahr bei der Demontage der Baugruppe ausgeschlossen. Da die Daten auf dem Datenträger die Prozessführung bei der Demontage betreffen, kann weiterhin vorteilhaft die Demontage selbst automatisiert erfolgen, wodurch insbesondere Einzelkomponenten mit einem Gefährdungspotential für den Menschen mit hohem Sicherheitsstandard demontiert werden können.

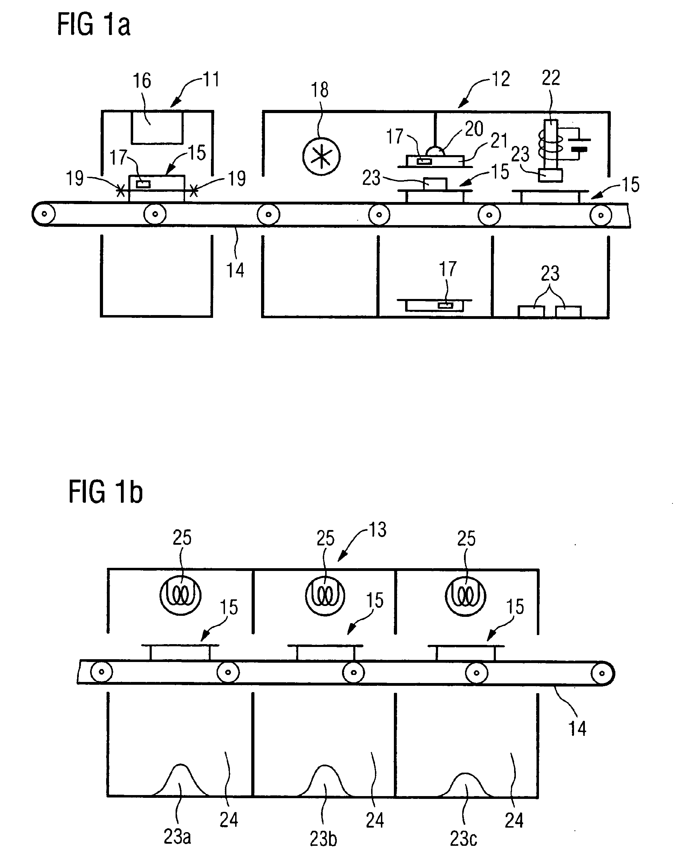

Weitere Einzelheiten der Erfindung werden im Folgenden anhand der Zeichnung beschrieben. Hierbei zeigt die Figur 1a und 1b ein Ausführungsbeispiel einer Demontageeinrichtung mit einer Ausleseeinheit für den an der zu demontierenden Baugruppe angebrachten erfindungsgemäßen Datenträger und weiterhin einer Kühleinheit und einer Heizeinheit zur Demontage der Einzelkomponenten der Baugruppe im schematischen Schnitt.

Eine Demontageeinrichtung besteht aus einer Ausleseeinheit 11, einer Kühleinheit 12 und einer Heizeinheit 13. Alle diese Einheiten werden durch ein Förderband 14 durchlaufen, auf dem eine Baugruppe 15 nacheinander durch die Einheiten 11, 12, 13 transportiert werden kann.

Zunächst durchläuft die Baugruppe 15 die Ausleseeinheit 11. In dieser wird mittels eines Auslesegerätes 16 ein Datenträger 17, der fest mit der Baugruppe verbunden ist, ausgelesen, wobei die Daten, die den Demontageprozess der Baugruppe betreffen, zur Steuerung des Demontageprozesses in die Demontageeinrichtung eingelesen werden. Der Datenträger kann beispielsweise ein RFID-Tag, genauso jedoch ein anderer Informationsträger (z. B. Barcode) sein.

Nach dem Durchlaufen der Ausleseeinheit 11 gelangt die Baugruppe in die Kühleinheit 12. Dort wird sie mittels einer Kühleinrichtung 18 genügend weit abgekühlt, dass Verbindungselemente 19 der Baugruppe aus einer FGL (z. B. NiTi) eine martensitische Phasenumwandlung durchlaufen, wodurch ein sehr weiches Gefüge entsteht. Durch ein Handhabungswerkzeug 20 lässt sich daher ein Gehäusedeckel 21 von der Baugruppe 15 entfernen. Die Verbindungselemente 19 werden dabei verformt, nicht jedoch die Gehäuseteile, so dass von einer lösbaren Verbindung zwischen den Gehäuseteilen gesprochen werden kann.

Im nächsten Verfahrensschritt wird mittels eines Magnetfelderzeugers 22 eine weitere Einzelkomponente 23, z. B. das Netzteil der Baugruppe 15 entfernt. Durch das Magnetfeld wird ein Formgedächtniseffekt einer MFGL, z. B. NiMaGa, aktiviert, so dass daraus gefertigte Verbindungselemente für die Einzelkomponente gelöst werden. Der Magnetfelderzeuger dient dabei gleichzeitig als Handhabungswerkzeug, indem er die Einzelkomponente 23 von der Baugruppe 15 löst.

Gemäß Figur 1b durchläuft die Baugruppe 15 in der Heizeinheit weitere Demontageschritte. Hierbei wird diese in mehreren Kammern 24 schrittweise durch Heizeinrichtungen 25 aufgeheizt, wobei in jeder Kammer 24 ein höheres Temperaturniveau der Baugruppe 15 erreicht wird. Die Baugruppe 15 durchläuft damit ein treppenförmiges Temperaturprofil, wobei jedes Temperaturniveau zur Auslösung des Formgedächtniseffektes bestimmter Verbindungselemente (nicht dargestellt) geeignet ist. Dabei werden in den Kammern 24 jeweils Einzelkomponenten 23a, 23b, 23c in Gruppen aus der Baugruppe 15 herausgelöst, wodurch in den Kammern 24 eine Sortierung möglich wird. Die Sortierung kann beispielsweise nach Warenklassen, Wiederverwendungsmöglichkeit oder Entsorgungsart erfolgen.

## Patentansprüche

1. Baugruppe mit einer Vielzahl von Einzelkomponenten (23), die zumindest teilweise durch Verbindungselemente (19) aus einer Formgedächtnislegierung (FGL) lösbar miteinander verbunden sind
**dadurch gekennzeichnet,**
**dass** die Baugruppe einen unabhängig von der Funktion der Baugruppe auslesbaren Datenträger (17) enthält, auf dem Daten für eine Automatisierung der Prozessführung einer Demontageeinrichtung (11, 12, 13) gespeichert sind.

2. Baugruppe nach Anspruch 1
**dadurch gekennzeichnet,**
**dass** auf dem Datenträger ein zum Lösen der Einzelkomponenten geeignetes Temperaturprofil gespeichert ist, welches durch eine geforderte Temperatur der Baugruppe oder der Demontageeinrichtung (11, 12, 13) abhängig vom zeitlichen Verlauf des Demontageablaufes oder abhängig vom Ort in der Demontageeinrichtung definiert ist.

3. Baugruppe nach Anspruch 2,
**dadurch gekennzeichnet,**
**dass** das Temperaturprofil einen treppenartigen Verlauf aufweist.

4. Baugruppe nach Anspruch 2 oder 3,
**dadurch gekennzeichnet,**
**dass** für unterschiedliche Regionen der Baugruppe unterschiedliche Temperaturprofile gespeichert sind.

5. Baugruppe nach einem der vorangehenden Ansprüche,
**dadurch gekennzeichnet,**
**dass** die Einzelkomponenten zumindest teilweise aus einer magnetischen Formgedächtnislegierung (MFGL) bestehen und auf dem Datenträger Daten für ein zum Lösen dieser Einzelkomponenten geeigneten Einsatz eines Magnetfelderzeugers (22) der Demontageeinrichtung gespeichert sind.

6. Baugruppe nach einem der Ansprüche 2 bis 5,
**dadurch gekennzeichnet,**
**dass** auf dem Datenträger bezüglich der Einzelkomponenten (23) der Lösezeitpunkt im Demontageablauf oder der Löseort in der Demontageanlage gespeichert ist.

7. Baugruppe nach einem der vorangehenden Ansprüche,
**dadurch gekennzeichnet,**
**dass** auf dem Datenträger zusätzlich recyclingrelevante Daten der Einzelkomponenten gespeichert sind.

8. Verfahren zum Demontieren einer Baugruppe (15) mit einer Vielzahl von Einzelkomponenten (23), die zumindest teilweise durch lösbare Verbindungselemente (19) aus einer Formgedächtnislegierung (FGL) verbunden sind, unter Ausnutzung des Formgedächtniseffektes
**dadurch gekennzeichnet, dass**
- Daten für eine Automatisierung der Prozessführung der Demontage einem als Teil der Baugruppe ausgeführten Datenträger (17) entnommen werden,
- die Daten in eine Demontageeinrichtung (11, 12, 13), in der die automatisierte Demontage erfolgen soll, eingespeist werden und
- die Baugruppe mit Hilfe der eingespeisten Daten in der Demontageeinrichtung automatisch demontiert wird.

## Claims

1. Module having a multiplicity of individual components (23) which are releasably connected to one another at least partially by connecting elements (19) made of a shape memory alloy (SMA),
**characterized in that**
the module contains a data medium (17) readable independently of the function of the module, on which data are stored for automating the process control of a dismantling device (11, 12, 13) .

2. The module as claimed in Claim 1,
**characterized in that**
a temperature profile suitable for releasing the individual components is stored on the data medium, which is defined by a required temperature of the module or of the dismantling device (11, 12, 13) depending on the time profile of the dismantling procedure or depending on the position in the dismantling device.

3. The module as claimed in Claim 2,
**characterized in that**
the temperature profile has a stepped profile.

4. The module as claimed in Claim 2 or 3,
**characterized in that**
different temperature profiles are stored for different regions of the module.

5. The module as claimed in one of the preceding claims,
**characterized in that**
the individual components consist at least partially of a magnetic shape memory alloy (MSMA) and data for using a magnetic field generator (22) of the dismantling device suitably for releasing these individual components are stored on the data medium.

6. The module as claimed in one of Claims 2 to 5,
**characterized in that**
the release time in the dismantling procedure or the release position in the dismantling system is stored on the data medium in respect of the individual components (23).

7. The module as claimed in one of the preceding claims,
**characterized in that**
recycling-relevant data of the individual components are additionally stored on the data medium.

8. Method for dismantling a module (15) having a multiplicity of individual components (23), which are connected at least partially by releasable connecting elements (19) made of a shape memory alloy (SMA), by using the shape memory effect,
**characterized in that**
- data for automating the dismantling process control are taken from a data medium (17) configured as part of the module,
- the data are entered into a dismantling device (11, 12, 13) in which the automated dismantling is intended to take place and
- the module is automatically dismantled in the dismantling device with the aid of the entered data.

## Revendications

1. Module ayant une pluralité de composants (23) individuels qui sont reliés entre eux de manière amovible au moins en partie par des éléments (19) de liaison en un alliage (FGL) à mémoire de forme,
**caractérisé**
**en ce que** le module comporte un support (17) de données, qui peut être lu indépendamment du fonctionnement du module et sur lequel sont mémorisées des données pour une automatisation de la conduite des opérations d'un dispositif (11, 12, 13) de démontage.

2. Module suivant la revendication 1,
**caractérisé**
**en ce qu'**il est mémorisé sur le support de données un profil de température approprié pour détacher les composants individuels, qui est défini en fonction de la courbe dans le temps du déroulement du démontage ou en fonction de l'emplacement dans le dispositif de démontage par une température du module ou du dispositif (11, 12, 13) de démontage qui est exigée.

3. Module suivant la revendication 2,
**caractérisé**
**en ce que** le profil de température a une courbe en escalier.

4. Module suivant la revendication 2 ou 3,
**caractérisé**
**en ce qu'**il est mémorisé des profils de température différents pour des régions différentes du module.

5. Module suivant l'une des revendications précédentes,
**caractérisé**
**en ce que** les composants individuels sont constitués au moins en partie d'un alliage (MFGL) magnétique à mémoire de forme et il est mémorisé sur le support de données des données pour une utilisation, propre à détacher ces composants individuels, d'un dispositif (22) engendrant un champ magnétique du dispositif de démontage.

6. Module suivant l'une des revendications 2 à 5,
**caractérisé**
**en ce qu'**il est mémorisé sur le support de données, pour ce qui concerne les composants (23) individuels, l'instant du détachement dans le déroulement du démontage ou l'emplacement du détachement dans l'installation de démontage.

7. Module suivant l'une des revendications précédentes,
**caractérisé**
**en ce qu'**il est mémorisé sur le support de données, en outre, des données relevant du recycling des composants individuels.

8. Procédé de démontage d'un module (15) ayant une pluralité de composants (23) individuels qui sont reliés au moins en partie par des éléments (19) amovibles de liaison en un alliage (FGL) à mémoire de forme, en utilisant l'effet de la mémoire de forme
**caractérisé en ce que**
- on prélève des données pour une automatisation de la conduite des opérations du démontage d'un support (17) de données réalisé en tant que partie du module,
- on charge les données dans un dispositif (11, 12, 13) de démontage dans lequel le démontage automatisé doit s'effectuer et
- on démonte automatiquement le module à l'aide des données chargées dans le dispositif de démontage.
